# EUROPEAN PATENT SPECIFICATION

(11) **EP 1 747 491 B1**
(45) Date of publication and mention of the grant of the patent: **18.06.2008**
(21) Application number: 05734902.9
(22) Date of filing: 04.05.2005
(51) Int. Cl.: G02B 26/02, G02B 3/14

(54) **ELECTROWETTING CELL AND METHOD FOR DRIVING IT**
ELEKTROWETTINGSZELLE UND VERFAHREN ZU IHRER ANSTEUERUNG
CELLULE ELECTRONIQUE DE DEPLACEMENT LIQUIDE ET SON PROCEDE DE COMMANDE

(30) Priority: 07.05.2004 EP 04101996; 12.10.2004 EP 04104992
(43) Date of publication of application: 31.01.2007
(73) Proprietor: Koninklijke Philips Electronics N.V., 5621 BA Eindhoven (NL)
(72) Inventor: KUIPER, Stein, NL-5656 AA Eindhoven (NL); HENDRIKS, Bernardus, H., W., NL-5656 AA Eindhoven (NL); WEEKAMP, Johannus, W., NL-5656 AA Eindhoven (NL)
(74) Representative: Volmer, Georg
(86) International application number: PCT/IB2005/051463
(87) International publication number: WO 2005/109074

(56) References cited:
- WO-A-20/04099847
- WO-A-20/04102250
- US-A1- 2001 017 985
- GABAY ET AL: "Dynamic study of a varioptic variable focus lens" CURRENT DEVELOPMENTS IN LENS DESIGN AMD OPTICAL ENGINEERING, vol. 4767, 2002, pages 159-165, XP002335406 cited in the application
- PATENT ABSTRACTS OF JAPAN vol. 2002, no. 10, 10 October 2002 (2002-10-10) & JP 2002 169110 A (CANON INC), 14 June 2002 (2002-06-14) cited in the application
- PATENT ABSTRACTS OF JAPAN vol. 2002, no. 10, 10 October 2002 (2002-10-10) & JP 2002 162506 A (CANON INC), 7 June 2002 (2002-06-07)

## Description

The invention relates to an electrowetting cell having an optical axis, which cell contains in a fluid chamber a first and a second immiscible fluid, one of which being electrically conducting, and a meniscus being present on an interface of these fluids, the fluid chamber being provided with (1) a first and a second, opposed side, and the optical axis running from the first to the second side and the first fluid being located at least substantially between the first side and the meniscus; (2) an inner wall extending between the first and the second side and on which a fluid contact layer is present, (3) a first electrode, separated from the fluid by the fluid contact layer and (4) a second electrode, which acts on the electrically conducting fluid,
wherein the shape of the meniscus can be set by applying a voltage between the first and the second electrode and the cell can be transferred from a state of rest to an operating state, in which state of rest the meniscus meets the inner wall at a point of tangency.

The invention also relates to a lens, a lens system and an electronic appliance provided with such an electrowetting cell.

The invention further relates to a method for driving such an electrowetting cell by applying a voltage between the first and the second electrode in the cell.

Such an electrowetting cell is known for instance from WO-A 03/069380. The inner wall in the known cell is cylindrical. The optical axis of the cell in essence runs parallel with the wall. The first fluid in a state of rest extends along the inner wall. It meets the wall at the point of tangency, which substantially adjoins the second side. This is the result of the physical-chemical type of attraction. By applying the voltage - that is to say in the operating state - however, a capacitor-type operation evolves between the electrically conducting fluid and the first electrode and thus on the fluid contact layer. This produces a force that works in opposite direction to the attractive force described above. In this way the shape of the meniscus can be set. In the known cell the second fluid is the electrically conducting fluid, the fluids are transparent and have each a different refractive index. This renders the cell a highly suitable lens.

It is a disadvantage of the known cell that its construction height is relatively large. At any rate this construction height is desired to be limited for the cell to be built-in as a variable focus lens in a camera module for, for example, a mobile telephone.

Therefore, it is a first object of the invention to provide an electrowetting cell of the type defined in the opening paragraph having a smaller construction height.

This object is achieved by the electrowetting cell defined in claim 1.

The invention utilizes the recognition that a meniscus meets the wall and that by adjusting the orientation of the wall the direction of the meniscus is adjusted in the state of rest. As a result of an orientation towards the optical axis, the surface of the meniscus diminishes and thus the height of the meniscus. The height of the meniscus is here understood to mean the distance parallel with the optical axis between the point of tangency of the meniscus on the wall, on the one hand, and, on the other, the top of the meniscus where the latter crosses the optical axis. The connotation of 'meeting the wall' does not exclude that a very thin layer of the first fluid is present between the wall and the meniscus. The smaller height of the meniscus allows the construction height of the cell to be reduced.

In order to be able to operate the cell in a normal way from a state of rest, first a threshold voltage is to be applied. The threshold voltage causes the edge of the meniscus on the inner wall to move from the rest point of tangency to the operating point. Since there is an angle between the tangents to these points and since the fluid chamber at the operating point is narrower than at the point of tangency, the total shape of the meniscus does not change substantially. For that matter the tangent to the meniscus in the rest point of tangency is hardly oriented differently from the tangent to the meniscus in the operating point. However, in the rest point of tangency the meniscus meets the inner wall and in the operating point the meniscus ends on the inner wall.

In this respect it is an advantage of the cell in accordance with the invention that with a smaller construction height also the fluid volume in the chamber is reduced. This is advantageous since fluid expands and less fluid thus expands less in absolute sense. Measures to compensate for the fluid expansion, such as a flexible membrane, are better capable of setting off fluid expansion due to a rise in temperature. Such a membrane is preferably located in a sealing on the first side of the cell.

A cell in which the meniscus in the state of rest is tangent to a point of tangency which contains an angle to the optical axis, is known for example from Proc. SPIE Vol. 4767 (2002), 159. This known cell has an inner wall with a first and a second portion. In the first portion the fluid chamber is conical. In the second portion the inner wall forms a ninety degree angle to the optical axis. In the state of rest the meniscus is tangential to the first portion of the inner wall and in the operating state the meniscus ends on the same first portion.

It is an advantage of the cell in accordance with the invention that the operating point can be used as a reference state. A suitable way of establishing the shape of the meniscus consists of measuring the capacitance or the current. This capacitance or current can actually only be determined after a voltage has been applied, because without a voltage difference the capacitance cannot be defined in a proper way.

There is no physical reference state in the known cell. A reference could indeed be defined at a specific voltage and thus the capacitance could be measured. If, however, a measuring value is found that deviates from an initial measuring value, this may be linked to a shift of the meniscus primarily on the wall, but also primarily around the optical axis. Whereas the former is not relevant to the optical behavior of the cell, the latter is. Thus there is a contingency. The contingency will occur particularly in the event of changes in temperature since the first fluid, generally an oil, expands much more than the second fluid, generally a watery saline solution.

In the cell in accordance with the invention the threshold voltage defines a reference state. For that matter, the threshold voltage is no given value, but may be found to occur independently of the capacitance, that is to say, by means of the change in capacitance as a function of the applied voltage.

It is another advantage of the cell in accordance with the invention that this cell seems to be better resistant to voltage pulses. In the known cell an applied voltage immediately leads to a change of shape of the meniscus. With a brief high-voltage pulse there is a chance of the meniscus toppling. Such a phenomenon could eventually lead to some mixing of the fluids or other undesired effects. In the cell in accordance with the invention a voltage pulse is first to exceed the threshold voltage, which means to say that it is to lead to a small fluid displacement on the wall. If the voltage pulse is shorter than the time of the fluid displacement on the wall. If the voltage pulse is shorter than the time of the fluid displacement, the pulse will be gone even before the meniscus has substantially changed shape or has gained a large speed. Thus the cell is better resistant to the voltage pulses.

The enclosed angle between the tangent to the inner wall at the rest point of tangency and the optical axis is always smaller than ninety degrees since the meniscus could not be tangential to a ninety-degree angle. From Japanese patent application JP-A 2002-169110 a cell is known in which the meniscus is held at a predefined location by a tube which is inserted into the chamber. The bottom of the tube is flat, which means that the meniscus ends at the end of the tube and will be tangential to it. Moreover, the fluid contact layer is not present on the surface of the tube, but applied to the bottom of the chamber. The interaction between fluid and tube is thus also of an entirely different nature than in the cell in accordance with the invention.

This enclosed angle between the tangent to the inner wall at the rest point of tangency and the optical axis prefereably exceeds 15 degrees and is less than 75 degrees. More preferably, the enclosed angle is 30 degrees at the least and 60 degrees at the most.

In a further embodiment the fluid chamber is a first portion between the operating point and the first side is in essence cylindrical. Just with a cylindrical portion of the fluid chamber the use of a threshold voltage leads to a considerable reduction of the construction height. The advantage over a conical first portion lies in the fact that the available optical surface is maximized.

In another and preferably further embodiment the inner wall in a section between the tangent to the inner wall at the rest point of tangency and the operating point has a curve and is free from sharp corners. When there is a corner in the wall of the chamber, there is a risk of the meniscus being pinned to this corner, which is to say, ends just at this position and is not tangential to it. This could severely affect the behavior of the cell. If, however, the corner is small, this need not cause any problem.

Another advantage of this embodiment is the reduced chance of breakdown. This is the result of a smaller wall area. This also reduces the occurrence of undesired light reflections on the wall (ghosting).

The combination of a cylindrical portion and a rounded surface is advantageous in that the meniscus can be set to the desired state very swiftly. Generally the setting of the meniscus takes place very slowly at a 180-degree angle of tangency and veryswiftly at a 90-degree angle of tangency to the wall. In this embodiment the 180-degree angle of tangency is absent, because that is situated in the region below the threshold voltage. The 90-degree angle of tangency corresponds to a flat meniscus. This is a position that is important in practice in view of the small construction height and the small optical aberrations. In contrast, a conical chamber has a 180-degree angle of tangency and thus a portion with a slow setting. The 90-degree angle of tangency corresponds to a position in which the meniscus has already changed from spherical to hollow. In other words, around a flat position of the meniscus the angle of tangency is even larger than 90 degrees, and is thus less rapid.

It is highly advantageous when the fluid chamber is provided with a sub-chamber which is situated between the operating point and the second side of the fluid chamber. This sub-chamber has a sub-chamber point on the wall, in which the wall of the sub-chamber has a larger diameter than the fluid chamber has at the operating point and which a tangent to the inner wall at the sub-chamber point forms an enclosed angle to the optical axis, which angle is smaller than the angle between the tangent to the inner wall at the rest point of tangency and the optical axis. In essence this implies that the inner wall defines both the top and the side of the sub-chamber. An advantage of this is a better sealing of the chamber. Part of the first fluid will accumulate in the sub-chamber and that is to say directly on the inner wall. As a result, the interface between the inner wall and a sealing only contacts this first fluid which is customarily an oil. Hence the oil forms a barrier layer for diffusion of the second fluid, usually a watery salin solution along the interface and also towards the inner wall. This favorably affects the lifespan of the cell.

In yet a further embodiment the second fluid, which also in a state of rest fills the greater part of the sub-chamber, is the electrically conducting fluid. The first electrode is then located in a hole in the sealing on the second side of the chamber. This hole is in such position that it at least partly falls outside the chamber when perpendicularly projected onto the first side. This measure makes it possible to produce the first electrode in a non-transparent material, while the optically usable surface of the cell is not reduced. Examples of suitable materials are all metals and alloys. More particularly copper seems to be highly suitable.

In yet another embodiment the inner wall of the chamber is formed by an inner body. The use of an inner body has advantages for the constructability. The supporting construction of the cell can then be made at plate level after which individual inner bodies are placed in chambers in the plate. Subsequently, a sealing is provided which preferably contains means for canceling volume expansion, An example of such means is a membrane in or on a glass plate. The glass plate preferably has a metal pattern on the side facing away from the chamber. Such a pattern enables the chamber to be sealed by deposition of material that forms chemical bonds with the metal pattern. Examples are among others chemical vapor deposition, electroless deposition and electroplating, the latter example being considered to be the most advantageous. In a next step the cell is then filled, which can also take place at plate level.

By using an inner body the desired shapes can be provided separate from the formation of the supporting construction. This also holds for the application of the fluid contacting layer. This separate provision also allows to apply a different material for the supporting construction than that of the inner body, however, needless to observe, within the limits of that which is permissible in view of thermal expansion.

In another embodiment the fluid chamber has sealings on the first and second sides, at least one of which sealings being optically transparent and the sealing on the second side, which is situated underneath the meniscus, having a bulge which is situated in the fluid chamber. The bulge has for example the shape and format of the first side of the fluid chamber. The advantage of such a bulge is that the amount of fluid underneath the meniscus is reduced. This is particularly advantageous in view of the expansion of the fluid which is accompanied by a rise in temperature, because less fluid means less expansion. If the sealing is made of glass, such a bulge can easily be produced by cutting away the remaining portion by means of powder jets.

The electrowetting cell according to the invention can be applied as a lens, but also as another optical element such as a diaphragm, (part of) a display device, an optical filter. In a highly advantageous embodiment of a lens the fluids are optically transparent and they have different breaking indices and furthermore, the sealings are optically transparent. It is observed that the requirement of optical transparency does not imply that the sealing needs to be transparent in the whole optical spectrum. In the case of a lens, both sealings are optically transparent. The sealings may be flat, but this is not a necessity. For example a lens may be used as a sealing. On the side of the sealing facing away from the chamber mechanical aligning means are preferably arranged. In order to obtain the desired optical behavior the lens is preferably part of a lens system comprising a number of lenses. This lens system can comprise more than one electrically adjustable lens, which is desired for creating a zoom lens. For that matter, the electrowetting cell may also comprise not only one, but also two or more chambers. Each of the chambers comprises the elements of an electrowetting cell, as was elucidated in the opening paragraph, that is to say, a first and a second electrode; an electrically conducting and an insulating immiscible fluid which contact each other via a meniscus; a fluid contacting layer on a wall surface. The chambers need not be identical because the optical elements formed by the chambers need not be identical. The chambers may be positioned side by side but also in line; in the latter case the same optical axis runs through both chambers and the chambers are separated by a sealing and possibly a spacer of a desired height.

It is a second object of the invention to provide a method for driving an electrowetting cell in which the cell is better resistant to brief high-voltage pulses.

This object is achieved by the method defined in claim 13.

In the known cell the applied voltage immediately leads to a change of shape of the meniscus. In the event of a brief high-voltage pulse there is a chance of the meniscus folding or bending over, particularly when the cell has an inclined inner wall. Such phenomena could in the end give rise to a slight mixing of the fluids or other undesired effects. In the cell according to the invention a voltage pulse is first to exceed the threshold voltage, which is to say, it is to lead to a slight fluid displacement on the wall. If the voltage pulse is shorter than the time of the fluid displacement, the pulse has already gone before the meniscus has substantially changed shape or has obtained a large speed. Thus the cell is better resistant to voltage pulses.

It is an advantage of the method according to the invention that the capacitance had be better measured in the cell because the state of the cell belonging to the threshold voltage can be used as a reference state.

For driving the lens, preferably a separate driving mechanism is used. This mechanism particularly comprises an integrated circuit (driver IC). Such driver ICs are known per se. In the case where the lens or the lens system forms part of a camera module that also accommodates an image processor (image sensor), the driver IC and the image sensor may be combined to one integrated circuit. The camera module is here only one example of a device in which the cell and, more particularly, the lens according to the invention may be incorporated. Another example is a read and/or write apparatus for optical recording applications.

The method according to the invention is particularly applied in combination with the electrowetting cell according to the invention.

These and other aspects of the invention will be further explained with reference to diagrammatic drawings, in which:
Fig. 1 shows in a diagrammatic cross section a first embodiment of the cell according to the invention in a state of rest;
Fig. 2 shows the first embodiment, but then in an operating state in which a voltage is applied to the cell;
Fig. 3 shows in a diagrammatic cross section a second embodiment of the cell;
Fig. 4 shows in a diagrammatic cross section a third embodiment of the cell;
Fig. 5 shows in a diagrammatic cross section a fourth embodiment of the cell of which only the left half is shown, and
Fig. 6 shows in a diagrammatic cross section a cell according to the prior art.

The Figures are not drawn to scale and identical reference numerals in different Figures refer to corresponding elements.

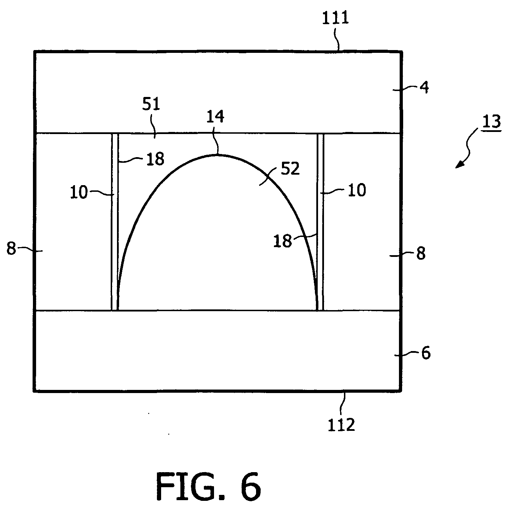

Fig. 6 shows in a diagrammatic cross section a prior art electrowetting cell 13. This cell is in a state of rest in which there is no voltage applied to the cell. The cell 13 comprises a fluid chamber 50 which is filled with a first fluid 51 and a second fluid 52. The fluids 51 and 52 have a interface which forms a meniscus 14. The fluid chamber 50 is closed by an inner wall 18 and by sealings 4, 6 on the first side 111 and second side 112 of the cell. The inner wall 18 is formed here by a body 8 with a fluid contacting layer 10 on the surface of it. The fluid contacting layer is in this case an apolar organic coating such as parylene. In addition, preferably a surface coating is applied which is commercially available from Du Pont under the name of AF1600. The choice of the fluid contacting layer 10 provides that the first fluid 51 is apolar and the second fluid 52 is polar. An example of a polar fluid is water, which, with salt, is electrically conducting. The first apolar fluid is electrically insulating and is for example an oil, a silicon oil, an alkane. If the cell is used as a lens, it is desired for both fluids to be optically transparent to the light to be permeated and that the refraction indices of the fluids are different. For different uses of the cell, such as a diaphragm or an optical filter, it may be advantageous to choose fluids having the same refractive index, but having different optical permeability. Proper bonding asks for disposing a coating of a material such as parylene on the body 8. The body 8 may serve as a first electrode. The second electrode is not shown in this Figure.

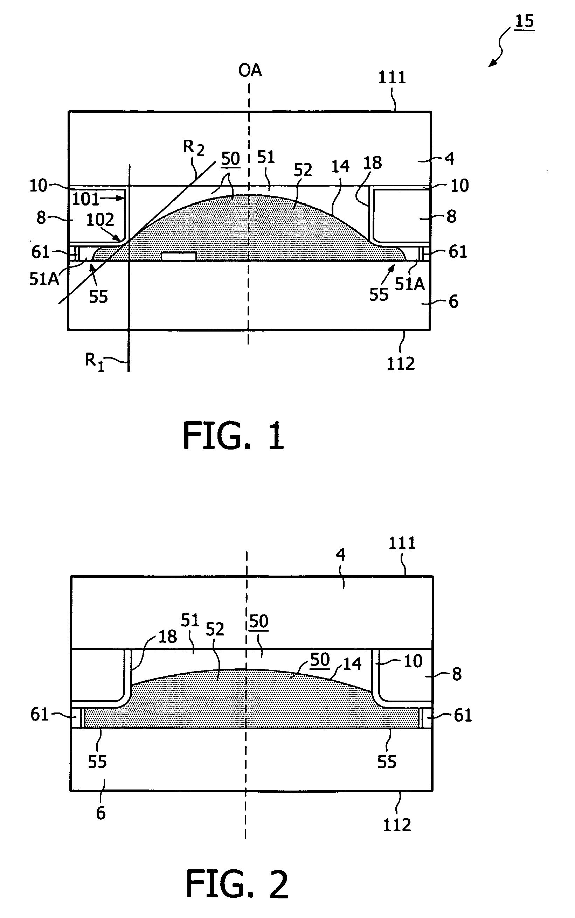

Figs. 1 and 2 show in a diagrammatic cross section a first embodiment of the cell 15 according to the invention. This cell 15 is substantially identical with the prior art cell 13 as regards components. A first discrepancy is the presence of an annular connecting-piece 61 between body 8 and sealing 6 on the second side. A second discrepancy is the presence of a sub-chamber 55.

The cell 15 shown in Fig. 1 is in a state of rest, which is also an idle mode here. The cell shown in Fig. 2 is turned on, which implies that there is a voltage across the cell 15. According to the invention there is an operating point 101 and a point of tangency 102 on the inner wall 18. Both points 101, 102 have a tangent R₁ and R₂. The tangents R₁ and R₂ have an orientation which can be defined relative to the optical axis OA of the cell 15. The enclosed angle between the tangent R₁ and the optical axis OA is 0° in this example and smaller than the enclosed angle between the tangent R₂ and the optical axis OA. The latter angle is about 45° in this example.

More particularly the tangent at the point of tangency 102 is relevant because at this point also the meniscus 14 is tangential to the inner wall. There is no force that causes the tangent R2 to the meniscus 14 to be more parallel with the optical axis OA; already in this state the first fluid 51 can cover the entire inner wall 18. Moreover, a different position of the meniscus 14 would imply a larger interface, which is disadvantageous with regard to energy. Covering the inner wall 18 is relatively simple in this example, because of the bend of the inner wall 18. As a result the first fluid 51 can flow along the inner wall 18 in a thin layer, the layer being extremely thin only at the point of tangency 102. This is shown in the Figure in the way that part of the first fluid 51A is situated beside the second fluid 52 in the sub-chamber 55. It is a further advantage of this embodiment that the inner wall 18 is free from corners between the first and the second points of tangency 101, 102. Such corners may cause undesired effects to occur when the cell 15 is driven, because a relatively large force is needed to lift the meniscus 14 over the corner.

The cell 15 of the embodiment shown in Fig. 1 further has an idle mode. When a voltage is applied across the cell 15, the electrically conducting fluid, in this case the second fluid 52, will have a tendency to shorten the distance to the first electrode. This first electrode is formed here by the body 8, which contains a metal. This tendency leads to the fact that the first fluid 15 is slowly removed from the inner wall 18. The process can be divided in two steps: in the first step the state of rest is started from and the meniscus 14 is shifted along the inner wall 18 in the direction of the first side 111. There is hardly any substantial change in the shape of the meniscus 14 then. From an optical point of view the cell 15 does not react or hardly reacts. However, this first step does require quite some force because the first fluid 51 is to be removed from part of the inner wall. This force is expressed in the threshold voltage. In the second step the threshold voltage is conquered and the cell 15 is in the operating mode. Now the meniscus 14 directly reacts to a change of voltage via an adjustment of the shape.

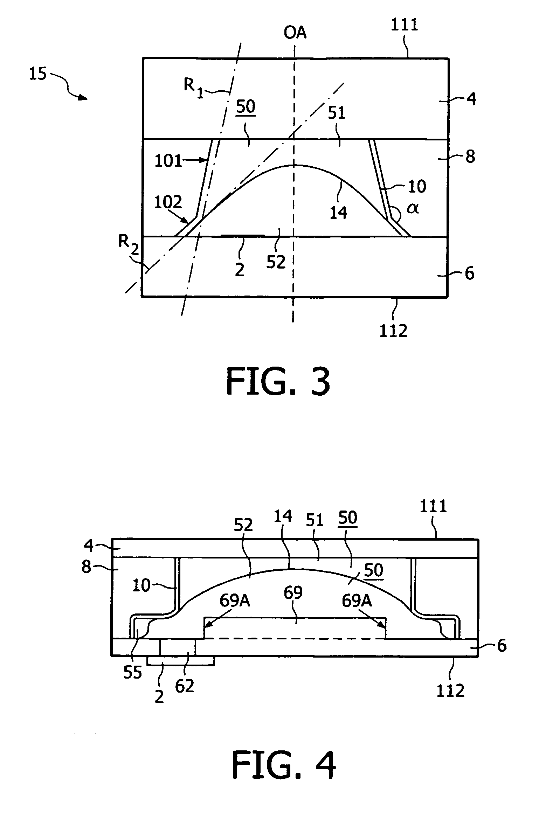

Fig. 3 shows in a diagrammatic cross section a second embodiment of the cell 15 according to the invention. Again the cell 15 is shown in a state of rest. This cell 15 has a simpler structure because there is no sub-chamber 55. The inner wall 18 is not bent either, which provides an angle α. This angle α is of the order of 140 to 175 degrees, preferably 165 to 175 degrees in order to avoid pinning effects. In this example the enclosed angle between the tangent to the operating point 101 and the optical axis OA is greater than 0°, in this case 15°. This tapering shape is advantageous in that the drive voltage is reduced. The enclosed angle between the tangent to the operating point 102 and the optical axis OA is here about 40°. In this embodiment also the construction height of the cell 15 is considerably reduced compared to the prior art.

In this Fig. 3 the electrodes are shown indeed. The first electrode is formed here by the body 8. The second electrode 2 is located on the inside of the fluid chamber 50. The second electrode 2 may comprise a suitable protective layer to avoid corrosion. A thin protective layer does not have a great negative effect on the operation of the electrode 2.

Fig. 4 shows in diagrammatic cross section a third embodiment of the cell 15 according the invention. This third embodiment shows minor differences from the embodiment of Fig. 1. Firstly the sealing 6 on the second side 112 of the cell 15 has a bulge 69. This bulge 69 extends over nearly the entire width of the fluid chamber 50 on the first side 111. In this way optical effects are avoided which are due to refractions or reflections on the edge or edges 69A of the bulge 69. As appears from the comparison of Figures 1 and 3 the volume of the second fluid 52 in the third embodiment is reduced by 25 to 30%.

A second difference from Fig. 1 relates to the second electrode 2. In this case this second electrode 2 is provided on the outside of the sealing 6 and is through a hole 62 in the sealing in contact with the electrically conducting fluid 52. Positioning the second electrode 2 outside the fluid chamber 50 offers great advantages for contacting. Besides, problems with the sealing of the fluid chamber 52 are avoided. It is observed that the second electrode 2 and the hole 62 are positioned beside the bulge 69 and, in perpendicular projection on the first side, also largely beside the fluid chamber 50. The presence of the electrode 2 on the second side 112 therefore has no disadvantageous effects. It is further observed that the second electrode in this example is electrically connected to the fluid. As an alternative the coupling may also be of a capacitive nature.

A third difference from Fig. 1 relates to the body 8. The shape of this body 8 is adjusted in this embodiment, so that a separate connecting-piece 61 has become redundant. This is certainly advantageous for the assembling.

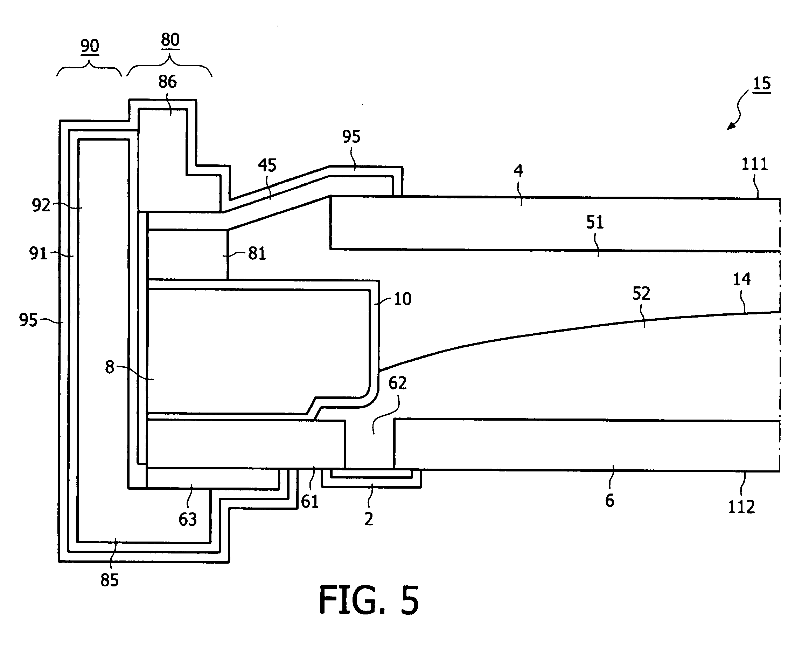

Fig. 5 shows a fourth embodiment of the cell 15 in which only the left-hand portion is depicted. The cell 15, however, is built up symmetrically so that the right-hand portion that is not shown forms the left-hand portion's mirror image. This fourth embodiment is basically an elaboration of the third embodiment, but without the bulge 69.

A first characteristic feature is the construction, which in this fourth embodiment is double-walled having an outer ring 90 and an inner ring 80. The inner ring comprises the inner body 8 which is covered with a fluid contacting layer 10. The inner ring also comprises part of the sealing 4 on the first side. This sealing 4 comprises an annular member 81 which is connected with a membrane 45 to a central portion of the sealing. The annular member 81 and the central portion can be made from a single glass plate, as will be explained below. The inner ring 80 further comprises the extremity 61 of the sealing 6 on the second side 112. This sealing 6 has a hole 62, a second electrode 2 and a metalization 63. In an alternative embodiment the sealing 6 on the second side 112 may be replaced by a construction that is comparable or equal to the one of the first side 111, that is to say, an annular member, a membrane and a cover plate.

Said three elements of the inner ring 80 - the annular glass member 81, the body 8 and extremity 61 - are clamped between a protrusion 85 of the outer ring 90 and an annular sealing 86. This sealing 86 here consists of a piece of metal, but may be anything having an electrically conducting surface. The outer ring 90 has an inner core 92 of plastic or other material that has a metalized surface 91. The metalized surface 91 also surrounds the metalization 63 of the sealing 6 on the second side 112 of the cell 15. In this way a mechanically stable connection is established.

The inner ring 80 and the outer ring 90 are connected to each other and also to the membrane 45 and the sealing 4. This connection is formed by a sealing layer 95. The sealing layer 95 comprises a suitable material of which polymer coatings of rubber, epoxy and the like, which are used as conventional protective layers, are examples. However, it is preferred for the sealing layer 95 to contain a metal. So doing a hermetic package is provided so that no diffusion of air, water or fluid is possible. An extremely suitable method of applying this metal sealing layer 95 is electroplating, because electroplating can be carried out for three-dimensional surfaces by immersion in a bath.

The second difference is found in the presence of a membrane 45. This membrane 45 provides the expansion of the fluid chamber 50 when fluids 51, 52 are expanding due to, for example, a rise in temperature. The combination of membrane 45, sealing 6 and annular member 61 may be formed for example by starting from a substrate such as a glass plate having a thickness of the order of 0.01 - 10mm, more particularly 0.05 - 0.5mm. Subsequent to the deposition of a photoresist material on both sides, the photoresist is exposed and developed. The resulting photoresist layer has an annular hole opposite the place where the membrane is to be formed. The photoresist layer at the front is processed such that an undulating surface is obtained, more particularly by means of mechanical techniques such as forging or by advanced photolithographical techniques, or by applying the photoresist or other layer by means of a die. The undulation is advantageous in that the surface can be enlarged by strengthening. This is what happens when the chamber expands. Needless to observe that also another, comparable more or less expandable shape can be chosen for the membrane. After the undulating surface has been strengthened with metal at the front, an etching step will be carried out from behind. This requires making a hole in the substrate. Removing the photoresist layer at the front and at the back provides the desired result.

On assembly the sealing 4 with the membrane 45 has the great advantage that it does not need attaching until after the filling of the fluid chamber 50. During this attaching first the sealing 4 is laid on or immersed in the first fluid 51. Then the annular member 81 is pushed down and immersed. A small part of the first fluid 51 will flow away from the fluid chamber 50 along the edges of the annular member 81. Pushing down the annular member 81 is simply possible thanks to the flexibility of the membrane 45 between the member 81 and the central portion of the sealing 4. By introducing the sealing 86 the fluid chamber 50 is closed, after which the fluid 51 outside the fluid chamber 50 can be removed and the sealing can be strengthened by means of the sealing layer 95.

## Claims

1. An electrowetting cell (15) having an optical axis (OA), which cell contains in a fluid chamber (50) a first (51) and a second (52) immiscible fluids, one of which being electrically conducting, and a meniscus (14) being present on an interface of these fluids (51, 52), the fluid chamber (50) being provided with
- a first (111) and a second (112) opposed sides, the optical axis (OA) running from the first (111) to the second side (112) and the first fluid (51) being located between the first side (111) and the meniscus (14);
- an inner wall (18) extending between the first (111) and the second side (112) and on which a fluid contact layer (10) is present,
- a first electrode (8), separated from the fluid by the fluid contact layer (10) and
- a second electrode (2), which acts on the electrically conducting fluid,
wherein the shape of the meniscus (14) can be set by applying a voltage between the first and the second electrode (2),
**characterized in that** the cell can be transferred from a state of rest to an operating state, in which state of rest the meniscus meets the inner wall at a rest point of tangency (102),
wherein the cell has a threshold voltage below which the shape of the meniscus is substantially independent of the applied voltage and at which threshold voltage the meniscus ends in an operating point (101), a tangent (R₂) to the inner wall at the rest point of tangency (102) having a larger enclosed angle to the optical axis through the cell than a tangent (R₁) to the inner wall at the operating point (101).

2. An electrowetting cell (15) as claimed in claim 1, **characterized in that** the (enclosed) angle between the tangent (R₂) to the inner wall at the rest point of tangency (102) and the optical axis (OA) has a value between 15 and 75 degrees.

3. An electrowetting cell (15) as claimed in claim 1, **characterized in that** the fluid chamber (50) in a first part between the operating point (101) and the first side is substantially cylindrical.

4. An electrowetting cell (15) as claimed in claim 1, **characterized in that** the inner wall in a section between the tangent (R₂) to the inner wall at the rest point of tangency (102) and the operating point (101) is bent and free from sharp corners.

5. An electrowetting cell (15) as claimed in claim 1 or 3, **characterized in that** the fluid chamber (50) is provided with a sub-chamber (55) which is situated between the operating point (101) and the second side of the fluid chamber (50), which sub-chamber has a sub-chamber point on the wall, in which the wall of the sub-chamber (55) has a larger diameter than the fluid chamber has at the operating point (101) and in which a tangent to the inner wall (18) at the sub-chamber point forms an enclosed angle to the optical axis, which angle is smaller than the angle between the tangent to the inner wall at the rest point of tangency (102) and the optical axis.

6. An electrowetting cell (15) as claimed in claim 5, **characterized in that** part of the first fluid (51) is present in the sub-chamber (55) on the inner wall (18).

7. An electrowetting cell (15) as claimed in claim 1, **characterized in that** an inner body is present in the cell, which inner body forms the inner wall (18).

8. An electrowetting cell (15) as claimed in claim 1, or 6, **characterized in that** the fluid chamber on both sides has a sealing (4, 6), at east one of the sealings being optically transparent and means being included in the sealing (4) on the first side (111) which cause a volume increase of the chamber in case of expansion of the fluids.

9. An electrowetting cell (15) as claimed in claim 5, **characterized in that** the second electrode (2) through a hole (62) in the sealing (6) is connected to the electrically conducting fluid, the hole (62) being positioned such that on projection on the first side it falls at least partially outside the fluid chamber.

10. A lens system comprising a plurality of lenses, a first one of which having a variable focus, **characterized in that** the electrowetting cell according to one of the previous claims is used as a first lens.

11. A device comprising an electrowetting cell as claimed in one of the claims 1-9 and an arrangement for driving the electrowetting cell.

12. A device as claimed in claim 11 in which the cell serves as a lens and furthermore an image processing device is present, so that the whole serves as a camera module.

13. A method of driving an electrowetting cell as claimed in claim 1 by applying a voltage between the first and the second electrode, **characterized in that** the cell is transferred from a state of rest to an operating state by the application of at least the threshold voltage of the electrowetting cell, in which operating state the shape of the meniscus is adjusted by the applied voltage.

## Patentansprüche

1. Elektrobenetzungszelle (15) mit einer optischen Achse (OA), welche Zelle in einer Fluidkammer (50) ein erstes (51) und ein zweites (52) nicht mischbares Fluid enthält, von denen eines elektrisch leitend ist, und wobei sich an einer Grenzfläche dieser Fluide (51, 52) ein Meniskus (14) befindet, wobei die Fluidkammer (50) versehen ist mit
- einer ersten (111) und einer zweiten (112), gegenüberliegenden Seite, wobei die optische Achse (OA) von der ersten (111) zu der zweiten Seite (112) verläuft und das erste Fluid (51) zwischen der ersten Seite (111) und dem Meniskus (14) liegt;
- einer Innenwand (18), die sich zwischen der ersten (111) und der zweiten Seite (112) erstreckt und auf der sich eine Fluidkontaktschicht (10) befindet,
- einer ersten Elektrode (8), die durch die Fluidkontaktschicht (10) von dem Fluid getrennt ist, und
- einer zweiten Elektrode (2), die auf das elektrisch leitende Fluid wirkt,
wobei die Form des Meniskus (14) durch Anlegen einer Spannung zwischen der ersten und der zweiten Elektrode (2) eingestellt werden kann,
**dadurch gekennzeichnet, dass** die Zelle von einem Ruhezustand in einen Betriebszustand versetzt werden kann, in welchem Ruhezustand der Meniskus die Innenwand in einem Berührungspunkt (102) berührt,
wobei die Zelle eine Schwellenspannung hat, unterhalb der die Form des Meniskus nahezu unabhängig von der angelegten Spannung ist und bei welcher Schwellenspannung der Meniskus in einem Betriebspunkt (101) endet, wobei eine Tangente (R₂) an die Innenwand im Ruhe-Berührungspunkt (102) mit der optischen Achse durch die Zelle einen größeren eingeschlossenen Winkel bildet als eine Tangente (R₁) an die Innenwand im Betriebspunkt (101).

2. Elektrobenetzungszelle (15) nach Anspruch 1, **dadurch gekennzeichnet, dass** der (eingeschlossene) Winkel zwischen der Tangente (R₂) an die Innenwand im Ruhe-Berührungspunkt (102) und der optischen Achse (OA) einen Wert zwischen 15 und 75 Grad hat.

3. Elektrobenetzungszelle (15) nach Anspruch 1, **dadurch gekennzeichnet, dass** die Fluidkammer (50) in einem ersten Teil zwischen dem Betriebspunkt (101) und der ersten Seite im Wesentlichen zylindrisch ist.

4. Elektrobenetzungszelle (15) nach Anspruch 1, **dadurch gekennzeichnet, dass** die Innenwand in einem Abschnitt zwischen der Tangente (R₂) an die Innenwand im Ruhe-Berührungspunkt (102) und dem Betriebspunkt (101) gebogen und frei von scharfen Ecken ist.

5. Elektrobenetzungszelle (15) nach Anspruch 1 oder 3, **dadurch gekennzeichnet, dass** die Fluidkammer (50) mit einer Unterkammer (55) versehen ist, die zwischen dem Betriebspunkt (101) und der zweiten Seite der Fluidkammer (50) liegt, welche Unterkammer auf der Wand einen Unterkammerpunkt hat, wobei die Wand der Unterkammer (55) einen größeren Durchmesser hat als die Fluidkammer im Betriebspunkt (101) und wobei eine Tangente an die Innenwand (18) im Unterkammerpunkt mit der optischen Achse einen eingeschlossenen Winkel bildet, welcher Winkel kleiner ist als der Winkel zwischen der Tangente an die Innenwand im Ruhe-Berührungspunkt (102) und der optischen Achse.

6. Elektrobenetzungszelle (15) nach Anspruch 5, **dadurch gekennzeichnet, dass** sich ein Teil des ersten Fluids (51) in der Unterkammer auf der Innenwand (18) befindet.

7. Elektrobenetzungszelle (15) nach Anspruch 1, **dadurch gekennzeichnet, dass** sich in der Zelle ein innerer Körper befindet, welcher innere Körper die Innenwand (18) bildet.

8. Elektrobenetzungszelle (15) nach Anspruch 1 oder 6, **dadurch gekennzeichnet, dass** die Fluidkammer an beiden Seiten eine Abdichtung (4, 6) hat, wobei zumindest eine der Abdichtungen optisch transparent ist und in der Abdichtung (4) an der ersten Seite (111) Mittel enthalten sind, die im Fall einer Ausdehnung der Fluide eine Volumenzunahme der Kammer bewirken.

9. Elektrobenetzungszelle (15) nach Anspruch 5, **dadurch gekennzeichnet, dass** die zweite Elektrode (2) durch ein Loch (62) in der Abdichtung (6) mit dem elektrisch leitenden Fluid verbunden ist, wobei das Loch (62) so positioniert ist, dass es bei Projektion auf die erste Seite zumindest teilweise außerhalb der Fluidkammer liegt.

10. Linsensystem mit einer Vielzahl von Linsen, von denen eine erste einen variablen Brennpunkt hat, **dadurch gekennzeichnet, dass** die Elektrobenetzungszelle nach einem der vorhergehenden Ansprüche als erste Linse verwendet wird.

11. Einrichtung mit einer Elektrobenetzungszelle nach einem der Ansprüche 1-9 und einer Anordnung zum Ansteuern der Elektrobenetzungszelle.

12. Einrichtung nach Anspruch 11, in der die Zelle als Linse dient und weiterhin eine Bildverarbeitungseinrichtung vorhanden ist, sodass das Ganze als Kameramodul dient.

13. Verfahren zum Ansteuern einer Elektrobenetzungszelle nach Anspruch 1 durch Anlegen einer Spannung zwischen der ersten und der zweiten Elektrode, **dadurch gekennzeichnet, dass** die Zelle durch das Anlegen zumindest der Schwellenspannung der Elektrobenetzungszelle von einem Ruhezustand in einen Betriebszustand versetzt wird, in welchem Betriebszustand die Form des Meniskus durch die angelegte Spannung eingestellt wird.

## Revendications

1. Cellule d'électromouillage (15) possédant un axe optique (OA), laquelle cellule contient, à l'intérieur d'une chambre à liquide (50), un premier liquide (51) et un second liquide (52) immiscibles, dont l'un est électriquement conducteur, et un ménisque (14) qui est présent sur une interface entre ces liquides (51,52), la chambre à liquide (50) étant pourvue de :
- une première face (111) et une seconde face (112) opposées, l'axe optique (OA) s'étendant depuis la première face (111) jusque la seconde face (112), et le premier liquide (51) étant situé entre la première face (111) et le ménisque (14) ;
- une paroi intérieure (18) s'étendant entre la première face (111) et la seconde face (112) et sur laquelle une couche de contact de liquide (10) est présente,
- une première électrode (8) séparée du liquide par la couche de contact de liquide (10), et
- une seconde électrode (2), laquelle agit sur le liquide électriquement conducteur,
où la forme du ménisque (14) peut être réglée par l'application d'une tension électrique entre la première et la seconde électrode (2),
**caractérisée en ce que** la cellule peut transiter d'un état de repos à un état de fonctionnement, dans lequel état de repos le ménisque rencontre la paroi intérieure en un point de tangence associé à l'état d'arrêt (102), où la cellule possède une tension électrique de seuil en dessous de laquelle la forme du ménisque est en substance indépendante de la tension électrique appliquée, et à laquelle tension électrique de seuil, le ménisque se termine en un point de fonctionnement (101), une tangente (R₂) à la paroi intérieure au point de tangence associé à l'état de repos (102) faisant avec l'axe optique traversant la cellule un angle intérieur plus grand que ne le fait une tangente (R₁) à la paroi intérieure au point de fonctionnement (101)

2. Cellule d'électromouillage (15) selon la revendication 1, **caractérisée en ce que** l'angle (intérieur) entre la tangente (R₂) à la paroi intérieure au point de tangence associé à l'état de repos (102) et l'axe optique (OA) a une valeur entre 15 et 75 degrés.

3. Cellule d'électromouillage (15) selon la revendication 1, **caractérisée en ce que** la chambre à liquide (50) dans une première partie entre le point de fonctionnement (101) et la première face est en substance cylindrique.

4. Cellule d'électromouillage (15) selon la revendication 1, **caractérisée en ce que** la paroi intérieure dans une section entre la tangente (R₂) à la paroi intérieure au point de tangence associé à l'état de repos (102) et le point associé à l'état de fonctionnement (101) est courbée et est libre d'arrêtes vives.

5. Cellule d'électromouillage (15) selon la revendication 1 ou 3, **caractérisée en ce que** la chambre à liquide (50) est pourvue d'une sous-chambre (55), laquelle est située entre le point de fonctionnement (101) et la seconde face de la chambre à liquide (50), laquelle sous-chambre possède un point correspondant à la sous-chambre sur la paroi, dans laquelle la paroi de la sous-chambre (55) a un plus grand diamètre que celui de la chambre à liquide au point de fonctionnement (101) et dans laquelle une tangente à la paroi intérieure (18) au point correspondant à la sous-chambre forme un angle intérieur avec l'axe optique, lequel angle est plus petit que l'angle entre la tangente à la paroi intérieure au point de tangence associé à l'état de repos (102) et l'axe optique.

6. Cellule d'électromouillage (15) selon la revendication 5, **caractérisée en ce qu'**une partie du premier liquide (51) est présent dans la sous-chambre (55) sur la paroi intérieure (18).

7. Cellule d'électromouillage (15) selon la revendication 1, **caractérisée en ce qu'**un corps interne est présent dans la cellule, lequel corps interne forme la paroi intérieure (18).

8. Cellule d'électromouillage (15) selon la revendication 1 ou 6, **caractérisée en ce que** la chambre à liquide possède sur les deux faces une obturation hermétique (4,6), au moins une de ces obturations hermétiques étant optiquement transparente et des moyens étant inclus dans l'obturation hermétique (4) sur la première face (111), lesquels produisent une augmentation de volume de la chambre en cas de dilatation des liquides.

9. Cellule d'électromouillage (15) selon la revendication 5, **caractérisée en ce que** la seconde électrode (2) est connectée au liquide électriquement conducteur au travers d'un trou (62) dans l'obturation hermétique (6), le trou (62) étant positionné de manière que, sur une projection sur la première face, il tombe au moins partiellement à l'extérieur de la chambre à liquide.

10. Système de lentilles comprenant une pluralité de lentilles, dont une première ayant un foyer variable, **caractérisé en ce que** la cellule d'électromouillage selon l'une des revendications précédentes est utilisée comme une première lentille.

11. Dispositif comprenant une cellule d'électromouillage selon une des revendications 1 à 9 et un montage servant à piloter la cellule d'électromouillage.

12. Dispositif selon la revendication 11 dans lequel la cellule fait office d'une lentille et où en plus un dispositif de traitement d'images est présent, de sorte que l'ensemble fait office d'un module de caméra.

13. Procédé de pilotage d'une cellule d'électromouillage selon la revendication 1 en appliquant une tension électrique entre la première et la seconde électrode, **caractérisé en ce que** la cellule transite d'un état de repos à un état de fonctionnement lors de l'application de au moins la tension électrique de seuil de la cellule d'électromouillage, dans lequel état de fonctionnement, la forme du ménisque est réglée par la tension électrique appliquée.
